(19) Europäisches Patentamt
European Patent Office
Office européen des brevets

(11) **EP 4 160 154 A1**

(12) **EUROPEAN PATENT APPLICATION**

(43) Date of publication:
**05.04.2023 Bulletin 2023/14**

(51) International Patent Classification (IPC):
***G01C 21/36*** *(2006.01)*

(21) Application number: **21200267.9**

(52) Cooperative Patent Classification (CPC):
**G01C 21/3602; G01C 21/3815; G01C 21/3833**

(22) Date of filing: **30.09.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Aptiv Technologies Limited**
**St. Michael (BB)**

(72) Inventors:
• **COLLING, Pascal**
  **42115 Wuppertal (DE)**
• **CREMER, Peet**
  **40239 Düsseldorf (DE)**

(74) Representative: **Manitz Finsterwald**
**Patent- und Rechtsanwaltspartnerschaft mbB**
**Martin-Greif-Strasse 1**
**80336 München (DE)**

(54) **METHODS AND SYSTEMS FOR ESTIMATING LANES FOR A VEHICLE**

(57)    Another computer implemented method for estimating lanes for a vehicle may include the following steps carried out by computer hardware components: determining measurement data at a location of the vehicle using a sensor mounted at the vehicle; transforming the measurement data of the sensor into a global coordinate system to obtain transformed measurement data; and estimating lanes at the location for the vehicle based on the transformed measurement data.

Fig. 3A

EP 4 160 154 A1

## Description

FIELD

The present disclosure relates to methods and systems for estimating lanes for a vehicle.

BACKGROUND

Digital imaging devices, such as digital cameras, are commonly used in automotive applications to detect lanes for a vehicle. An accurate and reliable lane detection is essential e.g., for automated driving or highway pilots. HD maps, i.e. maps with a high definition, can be created, using detections of traffic signs, lanes, road boundaries, and other objects of interest based on data from camera sensors. However, under bad weather conditions, e.g. when it is raining, detection methods based on camera data often fail.

Accordingly, there is a need to improve the quality and reliability of lane detections for a vehicle.

SUMMARY

The present disclosure provides a computer implemented method, a computer system and a non-transitory computer readable medium according to the independent claims. Embodiments are given in the subclaims, the description and the drawings.

In one aspect, the present disclosure may be directed at a computer implemented method for estimating lanes for a vehicle, wherein the method comprises the following steps performed (in other words: carried out) by computer hardware components: determining a first preliminary estimate of lanes based on a plurality of lane markings at a location of the vehicle; determining a second preliminary estimate of lanes based on a plurality of trails of objects at the location of the vehicle; comparing the first preliminary estimate of lanes and the second preliminary estimate of lanes; and determining a final estimate of lanes at the location of the vehicle based on the comparing.

In other words, the final estimation of lanes at a location of the vehicle may be determined by comparing and determining two preliminary estimated lanes at the location of the vehicle. The first preliminary estimation of lanes may be based on a plurality of lane markings. An "estimation of lanes" may also be referred to as "estimated lane". The second preliminary estimated lanes may be based on a plurality of trails of other road using objects. A lane may be a path where a road user, e.g. a vehicle, a bicycle, a bike, or the like, may be able to drive. Lane markings may comprise visible markings on a road surface, for example markings that separate traffic lanes or markings that limit a road on each side. In other words, lane markings may determine where it is possible and allowed to drive on a road. Trails of the objects may describe object trajectories, i.e. trails may specify where an object has moved on the road. Trails may be determined by recording a position or a location of an object at different successive points in time and by combining the position or the location of the object. A trail of an object may be a line string, i.e. an ordered list of coordinates of the object's center point, with additional information, for example, a bounding box around the object's center point with information of the size (length and width) and rotation of the objects.

According to an embodiment, the plurality of lane markings may be determined based on first sensor data, wherein the first sensor data may be determined using a first sensor, wherein preferably the first sensor may comprise a camera or a LiDAR sensor. Sensor data recorded by a camera may be used to detect RGB (red - green - blue) information having extremely high resolution. On the other hand, a LiDAR sensor may measure a range or a distance between the sensor and an object. The object may be another road user, preferably another vehicle. Sensor data from a LiDAR sensor may comprise an azimuth and an elevation angle of a vehicle or an object relatively to the sensor. The sensor data recorded from the LiDAR sensor may be very detailed and may include fine and accurate information about objects at a great distance. Ambient lighting may not influence the quality of the captured information by LiDAR, thus the results at day and night may be provided without loss of performance due to disturbances such as shadows, sunlight or headlight glare.

According to an embodiment, the plurality of trails of the objects may be determined based on second sensor data, wherein the second sensor data may be determined using a second sensor, wherein preferably the second sensor may comprise a camera or a radar sensor or a LiDAR sensor. Sensor data recorded by radar sensors, for example a distance, a direction or a relative speed of vehicles or objects, are impervious to adverse or bad weather conditions, i.e. radar sensors work reliably in dark, wet or even foggy weather.

According to an embodiment, the method may further comprise the following step carried out by the computer hardware components: determining the location of the vehicle. The location of the vehicle may be a position of the vehicle described in a coordinate system. The position (and/or the location) may be point or an area. The accuracy of the position or the location of an object may be dependent on the method used for determining the position or the location of the object. The position or the location of the vehicle may refer to center of gravity of the vehicle or another defined point of the vehicle, for example a location of a sensor mounted at the vehicle. The coordinate system may be a world coordinate system (WCS), wherein the world coordinate system may be a geographic coordinate system. The geographic coordinate system may allow to define a geographic position of an object, i.e. the position of the object on Earth. The geographic positions may be described by spherical coordinates (latitude, longitude, and elevation), or by map coordinates projected onto a plane, or by earth-centered, earth-fixed (ECEF) Cartesian coordinates in three dimensions.

According to an embodiment, the location of the vehicle may be determined based on simultaneous localization and mapping and/or a GPS system and/or a dGPS system and/or an inertial measurement unit. Simultaneous localization and mapping (SLAM) may be a method that builds a map and localizes an object, for example a vehicle, in that map at the same time. SLAM may allow the vehicle to map out unknown environments and may be used for path planning of autonomous vehicles and obstacle avoidance. Global position systems (GPS) or differential global position systems (dGPS) are satellite-based navigation systems that provide location information and time information of an object on Earth. Thus, the position of moving objects may be determined by GPS or dGPS. A dGPS system may be an enhancement over GPS. dGPS may provide correction signals to correct an error of a GPS signal, caused by time shifts. For generating these correction signals, dGPS may use fixed stations on the ground with precise known positions. Time errors and distance errors of the signals of satellites may be measured with these stations and used for positioning corrections of an object. An inertial measurement unit (IMU) may include very precise accelerometers and gyroscopes to estimate the acceleration and yaw rate of an object in three dimensions. Also, if the vehicle may enter areas such as tunnels where no or weak GPS signals are available, the IMU may deliver data to keep track of the vehicle's movements. Using the correction signals of an inertial measurement unit may allow to achieve a high accuracy, for example of 10 cm, for position estimation which may be used for autonomous driving systems.

According to an embodiment, the method may further comprise the following step carried out by the computer hardware components: detecting a pose of the vehicle in a world coordinate system. The pose of the vehicle may be an orientation of the vehicle. The orientation of the vehicle may be determined by three Euler angles (a yaw angle, a pitch angle and a roll angle) with respect to a fixed coordinate system, for example a world coordinate system.

According to an embodiment, the method may further comprise the following step carried out by the computer hardware components: estimating uncertainties of the first preliminary estimate of lanes and/or of the second preliminary estimate of lanes. Uncertainties may be estimated by any appropriate method, which may provide an uncertainty information, for detection and tracking of the lane markings. For example, uncertainties may be given or obtained using a Kalman filter or a Particle filter. Furthermore, or otherwise, uncertainties may be defined separately, for example, detected lane markings nearby the vehicle may have lower uncertainties than lane markings detected far away of the vehicle. Lane markings far away of the object may have higher uncertainties than lane markings around the vehicle. In the same way, uncertainties of trails may be estimated. Either given or obtained by the used method or defined separately. For example, a trail far away from the vehicle may have a higher uncertainty than a trail next to the vehicle.

According to an embodiment, the plurality of lane markings may be determined from several drives of the vehicle and/or from several drives of a plurality of recording vehicles. In other words, sensor data for determining the plurality of lane markings at a location of the vehicle may be determined by a sensor mounted at the vehicle. The vehicle may drive multiple times the same route to capture lane markings at same positions several times. Another possibility may be that a plurality of vehicles, i.e. not only the vehicle itself, may determine by sensors mounted at the plurality of vehicles lane markings at the positions of the plurality of vehicles. Thus, it may be possible to obtain a plurality of lane markings at a position in a short period of time.

According to an embodiment, the plurality of trails may be determined from several drives of the vehicle and/or from several drives of a plurality of recording vehicles. In other words, sensor data for determining the plurality of trails at a location of the vehicle may be determined by a sensor mounted at the vehicle. The vehicle may drive multiple times the same route to capture trails of other vehicles at same positions several times. Another possibility may be that a plurality of vehicles, i.e. not only the vehicle itself, may determine by sensors mounted at the plurality of vehicles trails of other road user, like other vehicles, at the positions of the plurality of vehicles. Thus, it may be possible to obtain a plurality of trails at a position in a short period of time.

According to an embodiment, the method may further comprise the following step carried out by the computer hardware components: checking a first plausibility of the first preliminary estimate of lanes and/or checking a second plausibility of the second preliminary estimate of lanes, wherein the first plausibility and/or the second plausibility may be based on geometric relations and/or rules. Rules may be given by legislation, for example speed limit or traffic regulations like one-way roads. Geometric relations may be considered in road construction such as a maximum possible curve radius. Also, the width of lanes may be determined by geometric relations.

According to an embodiment, a number of trails in the plurality of trails of objects may be above a predetermined trail threshold. The predetermined trail threshold may be a minimum number of estimated trails of objects that may be needed for a robust and accurate application of the method described herein. The minimum number may be dependent on the road type, for example, on highways a lower predetermined trail threshold may be sufficient than on urban roads.

According to an embodiment, a number of lane markings in the plurality of lane markings may be above a predetermined lane marking threshold. The predetermined lane marking threshold may be a minimum number of estimated lane markings that may be needed for a robust and accurate application of the method described herein. The minimum number may be dependent on the road type, for example, on highways a lower predetermined lane marking threshold may be sufficient than on urban roads.

In another aspect, the present disclosure is directed at a computer implemented method for estimating lanes for a vehicle, the method comprises the following steps carried out by computer hardware components: vehicle; transforming the measurement data of the sensor into a global coordinate system to obtain transformed measurement data; and estimating lanes at the location for the vehicle based on the transformed measurement data.

In other words, the measurement data at a location of the vehicle, captured by a sensor mounted at the vehicle, may directly be transformed into a global coordinate system, for example a world coordinate system, before estimating lanes at the location based on the transformed measurement data. The measurement data may be sensor data of the first sensor and/or the second sensor as described above, but is not limited to that. The measurement data may be sensor data from a different sensor, i.e. not the first sensor or second sensor. The estimated lanes may be lanes on a road where a road user may be able to drive. The global coordinate system may be the same as described above, preferably a world coordinate system based on GPS coordinates.

Using an inaccurate localization system may result in errors in the localization. This may manifest, for example, in inaccurate transformation matrices for the transformation from a vehicle coordinate system into a global coordinate system. According to various embodiments, the transformation from the vehicle coordinate system into the global coordinate system (GCS) may be applied before tracking (for example before tracking of lane markings and/or before tracking of trails), so that tracking is performed in the GCS; then, the positions of the trails and lane markings may jitter more due to the reduced quality of the transformation into the GCS. According to various embodiments, the jitter may be reduced by tracking (in other words, jitter may implicitly be reduced by the tracking, which may implicitly compensate for jitter in a time series of sensor data; in yet other words: a tracker may at least partially compensate and smooth out localization system errors), and/or by applying (or considering) physical crosschecks (for example crosschecks related to reasonable maximum values for acceleration and/or velocity vectors of vehicles, crosschecks for curvatures of lanes) to remove outliers (for example due to localization errors), as will be descried below. Summing up, if tracking is performed in the local coordinate system (e.g. the vehicle coordinates system), then tracking may be easier but a compensation of inaccurate localization may not be possible. The tracking in the global coordinate system on the other hand, may be extended by physical crosschecks or properties of the detected objects. The tracker then may output the uncertainties given for example by the Kalman filter or the Particle filter or an uncertainty defined by any other method.

According to an embodiment, the measurement data may comprise estimates for lane markings. Lane markings may comprise visible markings on a road surface, for example markings that separate traffic lanes or markings that limits a road on each side. In other words, lane markings may determine where it is possible and allowed to drive on a road. The estimates for lane markings may be the same as described above, but are not limited to them.

According to an embodiment, the measurement data may comprise estimates for trails of objects. Trails of the objects may describe object trajectories, i.e. trails may specify where an object has moved on the road. Trails of the objects may describe object trajectories, i.e. trails may specify where an object has moved on the road. Trails may be determined by recording a position or a location of an object at different successive points in time and by combining the position or the location of the object. The estimates for trails of an object may be the same as described above, but are not limited to them.

According to an embodiment, the measurement data may be determined from several drives of the vehicle and/or from several drives of a plurality of recording vehicles. In other words, the measurement data may be determined by at least one sensor mounted at the vehicle. The vehicle may drive multiple times the same route to capture measurement data multiple times at the same location of the vehicle using the at least one sensor. Another possibility may be that a plurality of vehicles, i.e. not only the vehicle itself, may drive the same route (once ore for several times). Thus, the at least one sensor of each of the vehicles may determine measurement data at the same location. Thus, it may be possible to obtain a plurality of measurement data at a position in a short period of time.

According to an embodiment, the sensor may comprise a radar sensor and/or a camera. As described above, radar sensors are impervious to adverse or bad weather conditions, working reliably in dark, wet or even foggy weather. They are able to identify the distance, direction and relative speed of vehicles or other objects. Measurement data from a camera may be used to detect RGB (red-green-blue) information with extremely high resolution.

According to an embodiment, the method may further comprise the following step carried out by the computer hardware components: determining the location of the vehicle. The location of the vehicle may be a position of the vehicle described in a coordinate system. The accuracy of the position or the location of an object may be dependent on the method used for determining the position or the location of the object. The position or the location of the vehicle may refer to center of gravity of the vehicle or another defined point of the vehicle, for example a location of a sensor mounted at the vehicle.

The coordinate system may be a world coordinate system (WCS), wherein the world coordinate system may be a geographic coordinate system.

According to an embodiment, the determining of the location of the vehicle may be based on simultaneous localization and mapping and/or a GPS system and/or a dGPS system and/or an inertial measurement unit.

According to an embodiment, the method may further comprise the following step carried out by the computer hardware components: checking a plausibility of the lanes, wherein the plausibility may be based on physical assumptions regarding a driving behavior of the vehicle and/or physical assumptions regarding a driving behavior of other vehicles.

According to an embodiment, the physical assumptions regarding the driving behavior of the vehicle may comprise assumptions regarding a velocity of the vehicle and/or assumptions regarding a yaw rate of the vehicle. Physical assumptions regarding the driving behavior of the vehicle may comprise correlations between movement data of the vehicle and geometrical constraints. For example, a maximum velocity or yaw rate of the vehicle in a curve of the road with a predetermined radius. The yaw rate may be an angular rate, angular velocity or yaw velocity of the vehicle and describe the velocity of the vehicle's rotation around the yaw axis, or a rate of change of the heading angle around the yaw axis of the vehicle. The yaw rate is commonly measured in degrees per second or radians per second. The yaw axis of the vehicle may describe the direction perpendicular to the direction of motion of the vehicle, pointing upwards perpendicular to the street.

According to an embodiment, the physical assumptions regarding the driving behavior of the other vehicles may comprise an acceleration assumption of the other vehicles and/or a braking assumption of the other vehicles and/or a yaw-rate assumption of the other vehicles. The physical assumptions as describe above may be also valid for the other vehicles, and vice versa.

According to an embodiment, the method may further comprise the following step carried out by the computer hardware components: estimating uncertainties of the transformed measurement data.

According to an embodiment, the lanes may be estimated further based on weights with a confidence value. Uncertainties of lanes may be computed for the defining properties of the lanes such as position and curvature. These statistical measures may be computed from the statistical moments (for example mean and variance) of the trails. The calculation may comprise the following steps: a lane candidate may be initialized at the center of a high-density region, if there is a high density of trails around a spatial position (e.g. measured by a moving window); the trails in the vicinity of the lane candidate may be associated to the candidate; some trails may agree more with the lane candidate than others, therefore, by taking a window around the lane candidate, the mean and variance of position and curvature of the trails in the window may be estimated; the mean and variance of these measures may then provide the uncertainties of the lane. The confidence value may be defined as a reciprocal value of the uncertainty (for example the confidence value may be one minus the uncertainty). The uncertainty or the confidence value may be used as a weight. A lane with a higher confidence (lower uncertainty) may be more important and thus may have a higher weight than a lane with a lower confidence (higher uncertainty).

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure may be directed to a vehicle, comprising the computer system described herein and at least one sensor, wherein the plurality of lane markings and/or the plurality of trails may be determined based on an output of the at least one sensor. The at least one sensor may be a camera, a radar sensor or a LiDAR sensor.

In another aspect, the present disclosure may be directed to a vehicle, comprising the computer system described herein and the sensor, wherein the measurement data may be determined based on an output of the sensor. The sensor may be a camera, a radar sensor or a LiDAR sensor.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented methods described herein.

It is understood that features described in connection with the methods can be realized in the computer system as well as the non-transitory computer readable medium and vice versa.

DRAWINGS

Exemplary embodiments and functions of the present disclosure are described herein in conjunction with the following drawings, showing schematically:

Fig. 1A    a flow diagram illustrating a method for estimating lanes for a vehicle according to various embodiments;

Fig. 1 B    a flow diagram illustrating a method for estimating lanes for a vehicle comparing a first preliminary estimate of lanes and a second preliminary estimate of lanes;

Fig. 2    a flow diagram illustrating a comparison of a first preliminary estimate of lanes and a second preliminary estimate of lanes;

Fig. 3A, 3B    a lane estimation based on estimated lane markings and estimated trails;

Fig. 3C, 3D    a lane estimation based on estimated trails;

Fig. 3E    a lane estimation based on estimated lane markings and estimated trails, considering drivability of lanes;

Fig. 3F    a lane estimation based on estimated trails, considering an object detection based on the estimated trails;

Fig. 3G    a lane estimation based on estimated lane markings and estimated trails, considering a variance of estimated trails;

Fig. 4    a flow diagram illustrating a method for estimating lanes for a vehicle based on transforming measurement data into a global coordinate system;

Fig. 5    a flow diagram illustrating a method for estimating lanes for a vehicle according to various embodiments;

Fig. 6    a flow diagram illustrating a method for estimating lanes for a vehicle according to various embodiments; and

Fig. 7    a computer system with a plurality of computer hardware components configured to carry out steps of a computer implemented method for estimating lanes for a vehicle to various embodiments.

DETAILED DESCRIPTION

Lane estimation may be based on different sensor data (e.g., camera, radar sensors and/or LiDAR sensors) and may use neural networks or classical methods not based on machine learning. High Definition (HD) lane maps may be generated for a given region or a location of a vehicle based on sensor data of many recording drives of recording vehicles using a method for Lane Map Aggregation (LMA). This may require a global localization in a global coordinate system (GCS) of the recording vehicles since the lanes must be given in the GCS as well. The (recording) vehicles may record various sensor data e.g., data from a camera, a LiDAR sensor and/or a radar sensor. Based on this data, lanes estimates may be derived from different detections e.g., from camera based or LiDAR based lane marking detections and/or from LiDAR based or radar based object detections and trackings, yielding trails of other vehicles. Thus, multiple lane estimates may be obtained for estimating a true lane. The multiple estimates of lanes - from multiple recording drives and/or multiple and different detections - may be used to get a reliable estimate of lanes and their position by aggregating the multiple estimates of lanes.

Therefore, lane map aggregation may be a process of combining multiple object detections or landmark detections from multiple recording drives of the same location into a single, more robust representation.

The process may include determining a first preliminary estimate of lanes based on a plurality of lane markings at a location of the vehicle by aggregating the plurality of lane markings detected from several drives of the vehicle and/or from several drives of a plurality of recording vehicles. Further, the process may include determining a second preliminary estimate of lanes based on a plurality of trails of objects at the location of the vehicle by aggregating the plurality of trails of objects detected from several drives of the vehicle and/or from several drives of a plurality of recording vehicles. Then the (aggregated) preliminary estimates of lanes with the information where they are based on (lane markings or trails) may be evaluated to get a final estimate of lanes with a confidence score. The aggregation may be for instance a geometric mean of the plurality of lane markings or trails or an arithmetic mean of the plurality of lane markings or trails. The confidence score may be an output of a lane function $l(t)$ or $l(t, m)$, which may take as input a vector containing the (aggregated) trails information or the (aggregated) trails information and (aggregated) lane markings information and may output a confidence value for the lane estimate. Thus, the confidence score may be derived by criterias of the aggregated lane markings and trails and additional information, for example, how many trails are used in the aggregation and from how many recordings the trails are estimated. The confidence of the final lane estimation may give information on whether the specified lane is drivable, i.e. non-blocked. The evaluation may include a comparison of the first preliminary estimate of lanes and the second preliminary estimate of lanes and a determination of a final estimate of lanes at the location of the vehicle based on the comparison.

In other words, the process describes a robust map-aggregated estimation of lanes based on the combination of two subsystems. One subsystem may be based on lane markings detection, wherein data obtained by a LiDAR sensor or a camera may be used. The plurality of thereby estimated preliminary lane markings from possibly several recording drives of the vehicle and/or several recording drives of other recording vehicles may then be aggregated in a first preliminary estimate of lanes. The other subsystem may follow a different approach and may estimate lanes based on object trails. These object trails may become available through an object detection method (e.g., LiDAR and/or camera and/or radar based). The trails of other road users may then be aggregated to describe another set of estimated lanes, a second preliminary estimate of lanes. Subsequently, both sets of estimated lanes for an area or a location around the vehicle from the two subsystems may then be compared, such that each estimation method may benefit from the results of the other. This may result in a reliable final estimate of lanes at the location of the vehicle compared to when using only a single lane detection method and even may allow to infer additional information such as whether a lane is blocked or drivable.

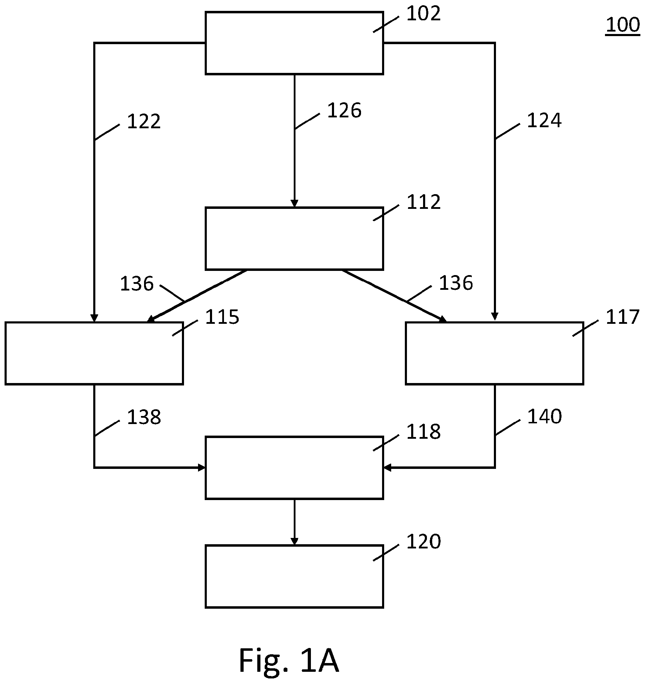

Fig. 1A shows a flowchart illustrating a method for estimating lanes for a vehicle according to various embodiments. At 102, sensor data 122, 124, 126 may be determined using a first sensor and a second sensor. At 112, using a localization system, a position 136 may be estimated in a world coordinate system based on sensor data 126. At 115, lanes from lane markings may be estimated based on the sensor data 122 and the position estimates 136. At 117, lanes from trails may be estimated based on the sensor data 124 and the position estimates 136. At 118, the estimated lanes 138 from lane markings and the estimated lanes 140 from trails may be compared. At 120, the final estimate of lanes may be determined based on the comparing of step 118. A detailed description of the steps will follow below.

According to one embodiment the method of estimating lanes for a vehicle may be based on determining map-aggregated road lanes by cross-checking two lane detection and estimation systems. The method may comprise the following steps carried out by computer hardware components: running a lane marking detection method to detect lanes as one subsystem; running an object detection method to detect other road users as another subsystem; aggregating the lane markings of the lane marking subsystem in a global map (using a localization system) to obtain estimates for where the lanes are; aggregating trails of other road users obtained from the object detection subsystem in a global map (using a localization system) to get a separate, independent estimate for where the lanes are; and cross-checking the lanes coming from both subsystems to obtain information of which lanes are actually drivable, non-blocked, and/or obstacle-free.

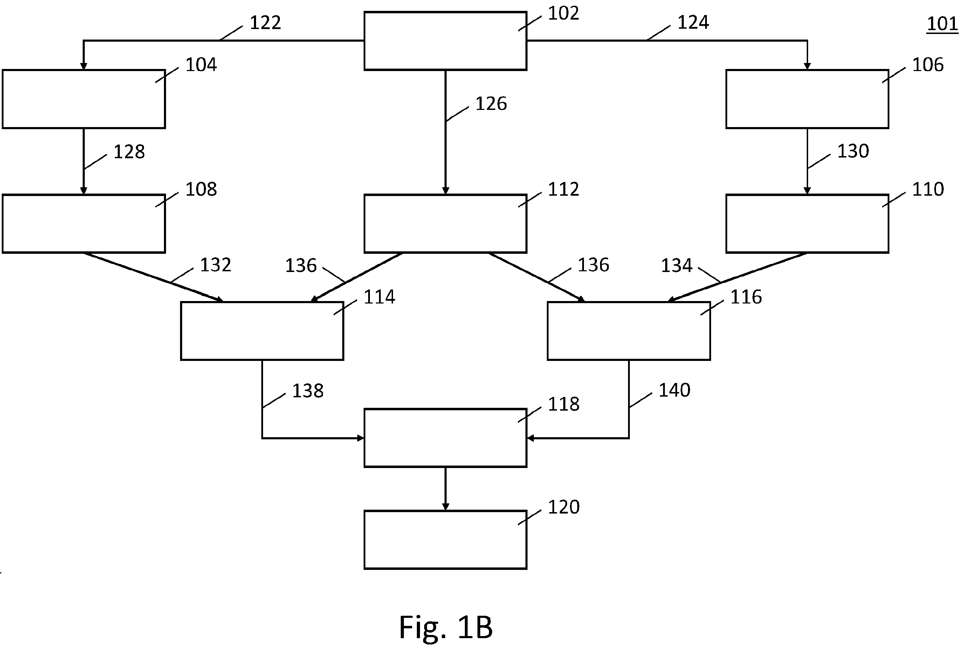

According to one embodiment the method of estimating lanes for a vehicle based on two subsystems is described in the following detailed description of Fig. 1B. Fig. 1B shows a flow diagram 101 illustrating a method for estimating lanes for a vehicle comparing a first preliminary estimate of lanes and a second preliminary estimate of lanes. At 102, sensor data 122, 124, 126 may be determined using a first sensor and a second sensor. The first sensor and/or the second sensor may be mounted at the vehicle or may be mounted at other recording vehicles that may be different from the vehicle. The vehicle and/or the other vehicles may be part of a vehicle fleet, for example a vehicle fleet of a company. The sensor data 122, 124, 126 may be determined from several drives of the vehicle and/or from several drives of a plurality of recording vehicles. At 104, a position and a type of lane markings may be determined based on the sensor data 122. Therefore, an appropriate method may be used, e.g. an image recognition method with neural networks or a classical method not based on machine learning. The sensor data 122 may be determined using a camera and/or a LiDAR sensor, or any other suitable sensor. At 108, estimates of lane markings 128 obtained from a plurality of sensor data 122 may be tracked using a tracker. The tracker may identify an object (for example lane markings or another road user) over multiple frames. A plurality of lane markings 132 may include uncertainty estimates of those lane markings (e.g. determined by a standard deviation method), wherein the uncertainty estimates for the lane markings may be determined, for example, by the tracker. The tracker may provide an uncertainty value. For example, a tracker using a Kalman filter or a Particle filter may provide uncertainty information or these uncertainties may be obtained. Otherwise, the uncertainty values may also be defined separately.

At 106, objects around the vehicle, preferably other road users, may be determined based on the sensor data 124. The objects may be other vehicles or bicycles or the like. The sensor data 124 may be determined using a radar sensor and/or a LiDAR sensor, or any other suitable sensor. At 110, the object estimates 130 determined from a plurality of sensor data 124 may be tracked using a tracker. Thus, trajectories or trails of the other road users, preferably other vehicles, may be determined. A plurality of trails 134 may include uncertainty estimates of those trails (e.g. determined by a standard deviation method), wherein the uncertainty estimates for the trails may be determined, for example, by the tracker.

At 112, a position and a pose of the vehicle may be determined in a world coordinate system based on sensor data 126. To determine the position and/or the pose of the vehicle, hardware such as a dGPS system, or an appropriate method such as an elaborate simultaneous localization and mapping (SLAM) may be used. SLAM systems may be based on camera sensors, LiDAR sensors, radar sensors, ordinary GPS sensors or a combination of those sensors. Additional, inertial measurement unit (IMU) sensors may be used for better performance.

At 114, the plurality of estimated lane markings 132 may be aggregated, wherein uncertainties may be considered. The uncertainties of the estimates may be used as a weight in the aggregation, wherein the aggregation may be for instance a weighted average (or weighted mean) of the plurality of estimated lane markings 132. In other words, the plurality of estimated lane markings 132 may be combined from several drives and/or from several drives of multiple recording vehicles recorded at the same position 136 to determine a combined, more accurate estimate of the lane markings at this position 136. The combined or aggregated lane markings may be used to determine a first preliminary estimate of lanes 138.

At 116, the plurality of estimated trails 134 may be aggregated, wherein uncertainties may be considered. The uncertainties of the estimates may be used as a weight in the aggregation, wherein the aggregation may be for instance a weighted average (or weighted mean) of the plurality of estimated trails 134. In other words, the plurality of estimated trails 134 may be combined from several drives and/or from several drives of multiple recording vehicles recorded at the same position 136 to determine a combined, more accurate estimate of where other road users may have driven at this position 136. The combined or aggregated trails may be used to determine a second preliminary estimate of lanes 140 based on a distribution of the trails.

At 118, the first preliminary estimated lanes 138 from lane markings and the second preliminary estimated lanes 140 from trails may be compared. The first preliminary estimated lanes 138 may indicate where lanes are according to the available information about lane markings. Lane markings may not necessarily have to coincide with drivable lanes. In many situations, lane markings could be visible, but the lane would still not be drivable because there is an obstacle, a construction area, or a prohibition to use the lane. The second preliminary estimated lanes 140 may give an indication on where other road users have driven and thereby may give a hint on which lane might actually be usable.

At 120, the final estimate of lanes may be determined based on the comparing of step 118. Combining the two methods, i.e. estimating lanes based on a plurality of lane markings and estimating lanes based on a plurality of trails, an accurate position of lanes (by lane markings) together with the information whether these lanes may actually be used may be received. In addition, the lane estimates may be more robust by combining a lane marking detection method based on one sensor with a trail detection method based on another sensor with another working principle. For example, the lane marking detection may be based on data observed by a camera while the trail detection may be based on data observed by a LiDAR sensor. Those sensors may have different failure modes. When these two methods are combined as described herein, reliable lanes may be estimated in most circumstances.

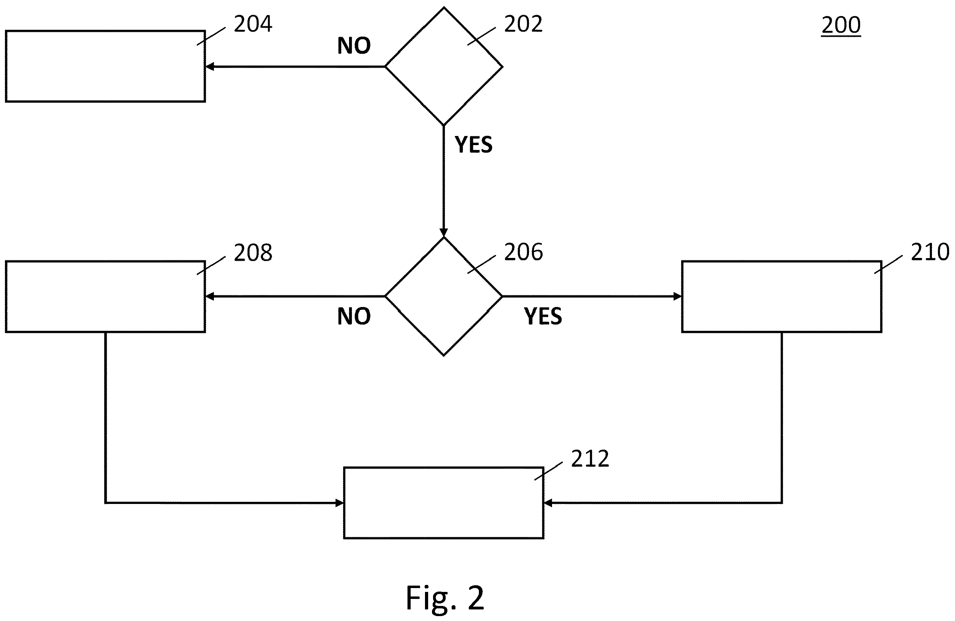

Fig. 2 shows a flow diagram 200 illustrating a comparison of the first preliminary estimate of lanes and the second preliminary estimate of lanes. At 202, it may be checked whether the second preliminary estimated lanes based on a plurality of trails are available. This may be the case if a minimum number of trails, i.e. trajectories of tracked vehicles, with respect to the number of recording drives is available. Depending on the environment, the number of trails might be different. For example, on highways there is in general more traffic. Thus, the minimum number of trails may be e.g., 8 trails from 10 recordings of a specific location on highways. For a suburban environment, the minimum number of trails may be e.g., 5 trails from 10 recordings as such an environment may have less traffic. The difference according to the location of the vehicle may ensure to have a minimum number of trails. The minimum number of trails may be a predetermined trail threshold.

At 204, if there are no second estimated lanes based on a plurality of trails available or the number of second estimated lanes based on a plurality of trails is below the predetermined trail threshold, the process of estimating lanes as described herein will be terminated. More recordings of the same location may be needed for estimating lanes for the vehicle.

At 206, if second estimated lanes based on a plurality of trails are available and the number of second estimated lanes based on a plurality of trails is above the predetermined trail threshold, there is a request whether first preliminary estimates of lanes based on a plurality of lane markings are available. That may be the case for a position or location or area of the vehicle if e.g., at least 80% or at least 90% of the recording drives contain lane markings detections. Because some environments may not contain lane markings, the definition of a predetermined number of estimated lanes based on lane markings may ensure that there are really lane markings available. Furthermore, the predetermined lane marking threshold may avoid that the lane marking detections are only false positives e.g., if in only 1 of 10 recordings a lane marking detection is given.

At 208, if no first preliminary estimates of lanes based on a plurality of lane markings are available or the number of first preliminary estimates of lanes based on a plurality of lane markings is below the predetermined lane marking threshold, the determination of the final estimate of lanes 212 may only be based on the second preliminary estimation of lanes based on the trails by a basic lane function I(t), wherein t may describe a dependency of estimated lanes based on trails. Mathematically I(t) may be a function $l(t) : \mathbb{R}^n \longrightarrow [0,1]$ which may take as input a vector containing the (aggregated) trail information and may output a confidence value for the lane estimate.

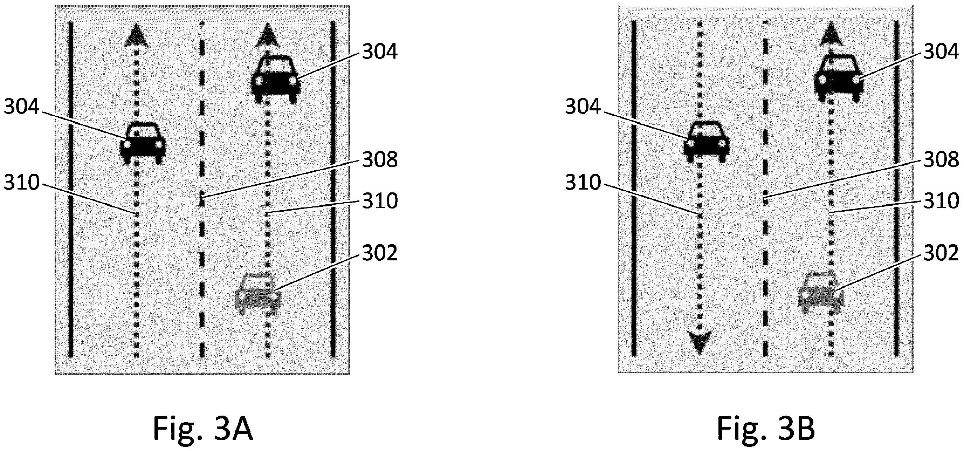

At 210, if first preliminary estimates of lanes based on a plurality of lane markings are available and the number of first preliminary estimates of lanes based on a plurality of lane markings is above the predetermined lane marking threshold, a comparison of the first preliminary estimate of lanes and the second preliminary estimate of lanes may be performed to determine the final estimated lanes 212. The comparison may be divided in multiple scenarios, which may be expressed with a lane function I(t, m), wherein t may describe a dependency of estimated lanes based on trails and m may describe a dependency of estimated lanes based on lane markings. Mathematically I(t, m) may be a function $l(t,m) : \mathbb{R}^i \longrightarrow [0,1]$ which may take as input a vector containing the (aggregated) trail information and lane markings information and may output a confidence value for the lane estimate. In other words, the lane function I(t, m) may take input information from the corresponding lane detection e.g., number of lanes with respect to the number of recordings and the estimated uncertainties from the estimated lanes based on lane markings and estimated lanes based on trails. For example, if there are lane estimates from trails and lane estimates from lane markings with high confidences, but both lanes intersect, then the true lane may be blocked. If both, the lane estimates from trails and the lane estimates from lane markings, do not intersect and have a logical distance to each other and are in parallel then the true lane may be confident. The lane function I(t, m) may be deterministic by identifying predefined scenarios (as shown in Figs. 3A to 3G) or may also be based on an artificial intelligence (AI) model like neural network.

The output of steps 208 or 210 may be a final estimate of lanes 212 at the location of the vehicle with a confidence value, wherein the confidence value may consider if the final estimate of lanes may be drivable lanes, i.e. for example not blocked by an object or due to traffic jam. Every lane estimate output of the system may provide a confidence value which has to be defined. Thus, the confidence value may depend on the number of recordings.

The method described herein may lead to a reliable lane estimation due to the combination of different methods (lane markings detection method and object detection method), which may use different sensors (e.g., camera, radar sensors and/or LiDAR sensors). It has been found that the aggregation of lanes obtained from multiple drives along the same route using an accurate localization system may lead to a reliable lane estimation for the same location. Also, additional information about the drivability of lanes by combining the information about the behavior of other road users with accurate lane information may provide a reliable lane estimation.

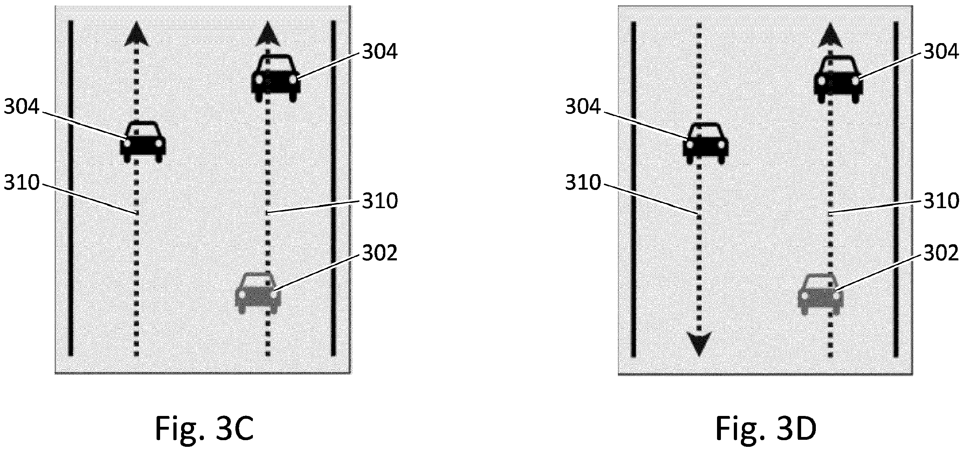

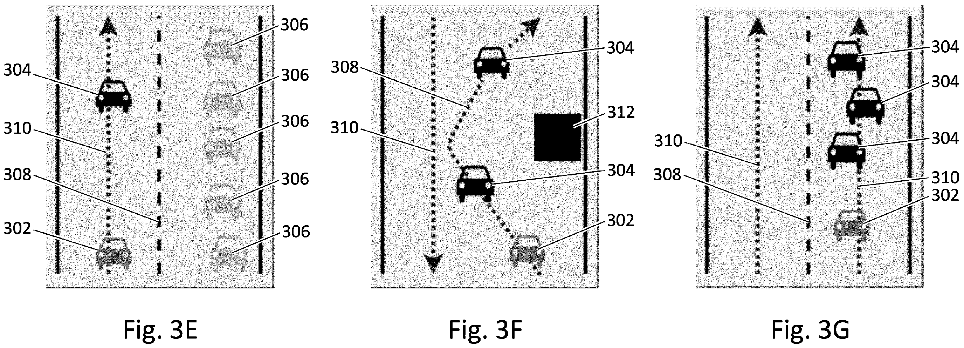

Figs 3A to 3G depict some scenarios where a lane cross-check, i.e. a comparison of estimated lanes based on lane markings and estimated lanes based on trails, yields more reliable final estimated lanes for a vehicle 302 compared to when not using the cross-check, i.e. only using a single lane detection method. Fig 3A and Fig. 3B show a lane estimation for a vehicle 302 based on estimated lane markings 308 and estimated trails of moving vehicles 304. Lane markings 308 indicate the lanes, and trails of the moving vehicles 304 indicate the lanes as well, but the lanes with driving direction 310 are provided by the trails of moving vehicles 304 only. Fig. 3C and 3D show a lane estimation based on estimated trails of moving vehicles 304, if no lane markings 308 are available. Therefore, the final estimated lanes are based on trails of the moving vehicles 304, which also provide information about the driving direction. Fig. 3E shows a lane estimation based on estimated lane markings 308 and estimated trails of moving vehicles 304, considering a drivability of the estimated lanes. Based on the preliminary estimated lanes based on lane markings 308, there are two lanes finally estimated. But the trails indicate that only the left lane is actually drivable, since the right lane is blocked by static vehicles 306. This scenario may be typically for cities, for example, when parking vehicles may block a lane or there is a traffic jam on a turning lane. Fig. 3F shows a lane estimation based on estimated trails of moving vehicles 304, considering detecting an obstacle 312 based on the estimated trails of the moving vehicles 304. Based on the preliminary estimated lanes based on the trails of the moving vehicles 304, the obstacle 312 may be detected, and the final estimated lanes may be adjusted. Fig. 3G shows a lane estimation based on estimated lane markings 308 and estimated trails of moving vehicles 304, considering a variance of estimated trails. In the case that the more dynamic trails have a high variance such that the lane may not easily be extractable, the more static preliminary lane estimations based on lane markings 308 may be used to adjust the preliminary lane estimations based on the trails for the final estimation of lanes.

The lane cross-check may also include a logical sanity check to identify and handle an unplausible constellation of multiple lane detections. The road system may follow specified rules, that may be defined by convention or even legislation, which may be considered. In a mathematical sense on the other hand, the lanes and lane markings as well as the trails may follow geometric relations and rules. Therefore, situations may be detected where the geometric description may not match typical rules of a road system and this information may be used to discard unplausible lanes. For example, for a road consisting of two lanes, the lanes need to be in parallel and are required to have a specific distance to each other such that vehicles can drive on both lanes without crashing into each other. If there is a lane estimation based on trails from a vehicle changing the lane, then the estimated lanes would contradict this logic. Furthermore, a lane may not able to intersect with lane markings (excluding crossroads). Finally, it may be assumed that, depending on the location and the speed limit, estimated lanes will be within certain boundaries of curvature.

It will be understood that while it is described herein that cross checks are applied for road parts by explicitly comparing the lanes obtained from lane markings with those obtained from trails (as shown in Figs. 3A to 3G), also these cross checks may be applied to more complex situations such as crossroads. However, these cross-checks may not focus on, for example, whether lane changes are actually allowed, mandated, recommended or else, e.g., in a highway situation where three lanes are narrowed down to two lanes.

In order to get accurate and reliable lanes, the Lane Map Aggregation (LMA) may use an accurate localization system like a differential Global Positioning System (dGPS) as well as accurate lane detections e.g., from trail-based LiDAR sensor data object detection, as mentioned above. In other words, an accurate localization system may determine the position and pose of the recording vehicle with high accuracy in order to aggregate lanes from detected lane markings or trails into a global map and benefit from the increase in robustness from doing so. LiDAR sensors and dGPS may not be equipped in series production vehicles and both sensors may be costly. For example, a dGPS may be able to localize the vehicle up to a resolution of several centimeters but also may be one of the most expensive components in the vehicle. Beside the costs, such sensors may also require extensive training and time of skilled engineers to operate. To overcome those deficiencies, it may also be possible according to another embodiment to replace these sensors by low-cost (in other words: cost efficient) sensors, still retaining accurate lane estimations.

According to one embodiment the method of estimating lanes for a vehicle may be based on determining map-aggregated road lanes using a low-cost sensor system. Besides estimations of lanes based on camera data or LiDAR data, estimations of lanes based on data from e.g., a radar sensor, may provide a new source for estimating lanes. This may enable not only using different sensor sources for the estimation of lanes when aggregating a plurality of lanes but may also substantially increase the number of measurements to average over. This may result in more reliable lanes even when using a less sophisticated, low-cost sensor system. In essence, more and different lane estimates may allow to mitigate localizations errors of the low-cost system simply by gathering more statistics.

Accurate HD maps of lanes in the world may be costly to obtain and maintain. Ideally, such maps should be cost-efficient and easy to maintain. Creating such maps may make it necessary to aggregate the lane detections from various methods in a global map. Thus, in turn, a localization system may be desired which is as accurate as possible. Equipping a vehicle with an accurate localization system may be expensive. For example, a good off-the-shelf dGPS system with an inertial measurement unit (IMU) may be very expensive. Furthermore, it may be desired to install and maintain these systems by specifically trained engineers. This cost may scale with the number of vehicles in the recording fleet that is used to generate the map. The statistics over which lane detections may be aggregated, and thereby the accuracy of the resulting map, may be limited by the number of vehicles that record. Thus, if the number of vehicles in the fleet is limited due to cost, this directly influences the accuracy.

It may also be possible to equip a vehicle with mostly low-cost sensors to perform the lane estimation, and a low-cost localization system, for example a regular GPS and simultaneous localization and mapping (SLAM), or regular GPS and a low-cost inertial measurement unti (IMU) to aggregate them in a map. Combining these low-cost sensors with extracting lane information also from lane markings and /or trails of other road users may lead to accurate lane estimations. The trails may be obtained from object detection methods running inside the vehicle. These object detection methods may operate on low-cost sensors, such as radar sensors and cameras instead of more expensive sensors like LiDAR sensors or sophisticated surround camera systems.

The lanes obtained may be cross-checked by physical sanity checks, for example of the trails of other road users. Jitter introduced from the sub-optimal localization system may be filtered out when aggregating the trails in the map. This may be done by making reasonable physical assumptions about the driving behavior of other vehicles, such as maximum accelerations, braking's, yaw rates and similar. Additionally, the trails of other vehicles coming out of the detection method may be first transformed into the global coordinate system (using the simple localization info available) and then may be tracked in this coordinate frame using a tracker. The use of the tracker after the data is transformed in the global map coordinate system may smooth and reduces the introduced jitter.

Similar to the above, physical sanity checks for the lanes obtained from a lane marking detection may be applied. Jitter from the localization system may be filtered out when aggregating the lane markings in the global coordinate system. This may be done by making reasonable physical assumptions about the driving behavior of the vehicle (using information such as vehicle velocity and yaw rate of the vehicle). This may allow to propagate the lane markings using a tracker to the expected next position and thereby reduce the introduced jitter.

A fusion between the lanes obtained from trails with the lanes obtained from lane markings as described above may be different than a simple tracking, as these physical constraints are applied on the ensemble of trails, rather than individual trajectories. This may be different than just applying a tracker with an underlying physical model for each tracked object. The same may apply for the aggregation of lane markings, where again physical sanity checks may be applied on the ensemble of lane markings to aggregate, in addition to any tracking of individual lane markings.

The method described herein may be applied not only with specially equipped test vehicles, but also to series production vehicles which may feature a lane detection system and an object detection system. In this way, potentially more statistics about lanes may be gathered, the accuracy may be increased and the costs may be further reduced.

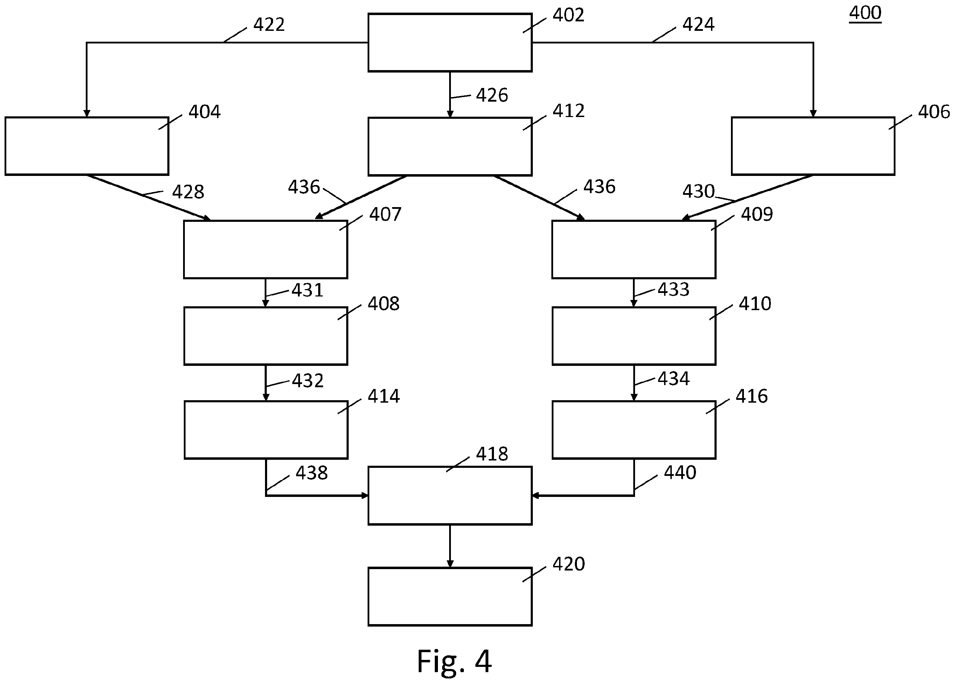

Fig. 4 shows a flow diagram 400 illustrating a method for estimating lanes for a vehicle based on transforming measurement data into a global coordinate system. The lane estimation may work carrying out the left side of Fig. 4 alone, comprising steps 402, 404, 407, 408, 412 and 414. It may also be possible to determine estimated lanes carrying out the right side of Fig. 4 alone, comprising steps 402, 406, 409, 410, 412 and 416. Another possibility may be to carry out all steps shown in Fig. 4, in accordance with the method described above, to determine final estimated lanes (step 420 in Fig. 4) at the location of the vehicle based on comparing (step 418 in Fig. 4) first preliminary estimate of lanes (steps 402, 404, 407, 408, 412 and 414 in Fig. 4) and the second preliminary estimate of lanes (steps 402, 406, 409, 410, 412 and 416 in Fig. 4). Each of the possibilities may be as described in detail as follows.

Starting with the left side of Fig. 4, in step 402, sensor data 422, 426 may be determined using a sensor or a plurality of sensors. The sensor, preferably a low-cost sensor, may be mounted at the vehicle or may be mounted at other recording vehicles that may be different from the vehicle. The vehicle and/or the other vehicles may be part of a fleet. The sensor data 422, 426 may be determined from several drives of the vehicle and/or from several drives of a plurality of recording vehicles. At 404, a position and a type of lane markings may be determined based on the sensor data 422. Therefore, an appropriate method may be used, e.g. an image recognition method with neural networks or classical methods not based on machine learning. The sensor data 422 may be determined using a camera and/or a forward-looking LiDAR sensor, or any other suitable sensor. At 412, a position and a pose of the vehicle may be determined in a world coordinate system based on sensor data 426. To determine the position and/or the pose of the vehicle, low-cost hardware such as a series GPS system (as may be equipped in almost all cars), or a combination of a series GPS system with an appropriate method such as an elaborate simultaneous localization and mapping (SLAM) may be used. SLAM systems may be based on camera sensors, LiDAR sensors, radar sensors, ordinary GPS sensors or a combination of those sensors. Alternatively, a combination of a series GPS system with inertial measurement unit (IMU) sensors or a combination of a series GPS system with SLAM and IMU may be used for a better performance. The selection of the sensor may depend on what is equipped in the vehicle. At 407 the lane markings estimate 428 may be transformed into a global coordinate system using position estimates 436. At 408, the lane markings estimate in global coordinates 431, obtained from a plurality of sensor data 422 and transformed into a global coordinate system, may be tracked using a tracker. In comparison with the method described above, the lane markings estimates are first transformed into the global coordinate system before doing the tracking. In this way, jitter from the low-cost localization system may be smoothed out. A plurality of lane markings described in global coordinates 432 may include uncertainty estimates of those lane markings (e.g. determined by a standard deviation method), wherein the uncertainty estimates for the lane markings may be determined, for example, by the tracker. At 414, the plurality of lane markings in global coordinates 432 may be aggregated, wherein the estimated uncertainties may be considered. In other words, the plurality of lane markings in global coordinates 432 may be combined from several drives of the vehicle and/or from several drives of multiple recording vehicles recorded at the same position 436 to determine a combined, more accurate estimate of the lane markings in global coordinates 432 at this position 436. The combined or aggregated lane markings may be used to estimate lanes 438 at the location for the vehicle based on the transformed measurement data.

Alternatively, the lane estimation may also be possible based on trails of other road users, mostly other vehicles around the vehicle. Therefore, at 402, sensor data 424, 426 may be determined using a sensor or a plurality of sensors. The sensor, preferably a low-cost sensor, may be mounted at the vehicle or may be mounted at other recording vehicles that may be different from the vehicle. The vehicle and/or the other vehicles may be part of a fleet. The sensor data 424, 426 may be determined from several drives of the vehicle and/or from several drives of a plurality of recording vehicles. At 406, objects, preferably other road users, which may be other vehicles or bicycles or the like, around the vehicle may be determined based on the sensor data 424. The sensor data 424 may be determined using a low-cost sensor, for example a radar sensor and/or a forward-looking LiDAR sensor, or any other suitable sensor. At 412, a position and a pose of the vehicle may be determined in a world coordinate system based on sensor data 426. To determine the position and/or the pose of the vehicle, low-cost hardware such as a series GPS system (as may be equipped in almost all cars), or a combination of a series GPS system with an appropriate method such as an elaborate simultaneous localization and mapping (SLAM) may be used. SLAM systems may be based on camera sensors, LiDAR sensors, radar sensors, ordinary GPS sensors or a combination of those sensors. Alternatively, a combination of a series GPS system with inertial measurement unit (IMU) sensors or a combination of a series GPS system with SLAM and IMU may be used for a better performance. The selection of the sensor may depend on what is equipped in the vehicle. At 409 the object estimates 430 may be transformed into a global coordinate system using position estimates 436. At 410, the object estimates in global coordinates 433, determined from a plurality of sensor data 424 and transformed into a global coordinate system, may be tracked using a tracker. Thus, object trajectories or trails of the other road users, preferably other vehicles, may be determined. In comparison with the method described above, the trail estimates are first transformed into the global coordinate system before doing the tracking. In this way, jitter from the low-cost localization system may be smoothed out. A plurality of trails in global coordinates 434 may include uncertainty estimates of those trails (e.g. determined by a standard deviation method), wherein the uncertainty estimates for the trails may be determined, for example, by the tracker. At 416, the plurality of trails in global coordinates 434 may be aggregated, wherein the estimated uncertainties may be considered. In other words, the plurality of trails in global coordinates 434 may be combined from several drives of the vehicle and/or from several drives of multiple recording vehicles recorded at the same position 436 to determine a combined, more accurate estimate of where other road users have driven at this position 436. The combined or aggregated trails may be used to estimate lanes 440 at the location for the vehicle based on the transformed measurement data.

Combining the aforementioned estimations of lanes based on lane markings and based on trails to determine final estimated lanes 420 at the location of the vehicle may lead to a more robust estimation of lanes as described above. Therefore, at 418, the estimates of lanes 438 from lane markings and the estimates of lanes 440 from trails may be compared. The estimates of lanes 438 may indicate where lanes are according to the available information about lane markings. The estimates of lanes 440 from trails may give an indication on where other road users have driven and thereby may give a hint on which lane might actually be usable. By combining the two methods, i.e. combining estimates of lanes based on a plurality of lane markings and estimates of lanes based on a plurality of trails, an accurate position of lanes (by lane markings) together with the information whether these lanes can actually be used may be received. Combining the estimations of lanes based on lane markings and estimations of lanes based on trails may be done by cross checks as described above.

With the method described herein, it may be possible to use a low-cost sensor setup, especially for the localization, in recording vehicles and still obtaining reliable estimates of lanes by extracting lane markings and/or lanes from trails e.g., based on radar detections, and doing various cross checks. Low-cost sensors may be off-the-shelf sensors. For example, it may be possible to use even the sensor setup of series production vehicles for the given purpose.

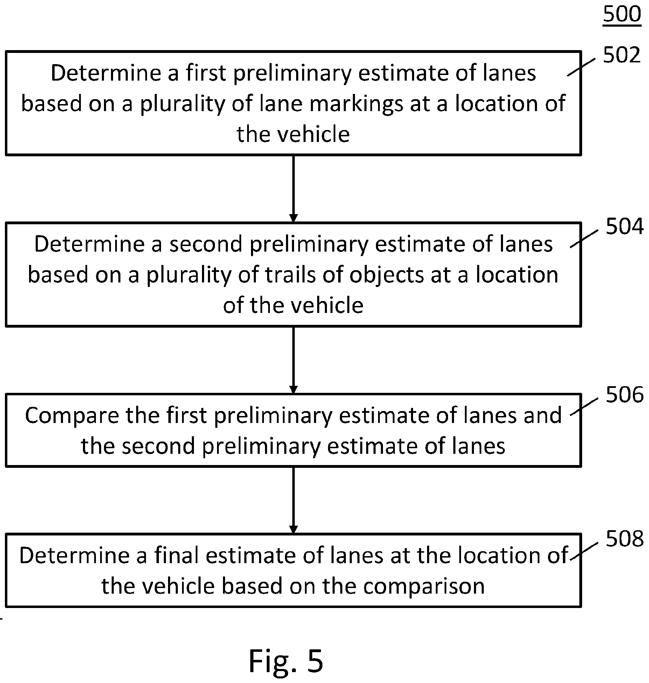

Fig. 5 shows a flow diagram 500 illustrating a method for estimating lanes for a vehicle according to various embodiments. At 502, a first preliminary estimate of lanes may be determined based on a plurality of lane markings at a location of the vehicle. At 504, a second preliminary estimate of lanes may be determined based on a plurality of trails of objects at the location of the vehicle. At 506, the first preliminary estimate of lanes and the second preliminary estimate of lanes may be compared. At 508, a final estimate of lanes at the location of the vehicle may be determined based on the comparing.

According to an embodiment, the plurality of trails of the objects may be determined based on second sensor data, wherein the second sensor data may be determined using a second sensor, wherein preferably the second sensor may comprise a camera or a radar sensor or a LiDAR sensor.

According to an embodiment, the method may further comprise the following step carried out by the computer hardware components: determining the location of the vehicle.

According to an embodiment, the location of the vehicle may be determined based on simultaneous localization and mapping and/or a GPS system and/or a dGPS system and/or an inertial measurement unit.

According to an embodiment, the method may further comprise the following step carried out by the computer hardware components: detecting a pose of the vehicle in a world coordinate system.

According to an embodiment, the method may further comprise the following step carried out by the computer hardware components: estimating uncertainties of the first preliminary estimate of lanes and/or of the second preliminary estimate of lanes.

According to an embodiment, the plurality of lane markings may be determined from several drives of the vehicle and/or from several drives of a plurality of recording vehicles.

According to an embodiment, the plurality of trails may be determined from several drives of the vehicle and/or from several drives of a plurality of recording vehicles.

According to an embodiment, the method may further comprise the following step carried out by the computer hardware components: checking a first plausibility of the first preliminary estimate of lanes and/or checking a second plausibility of the second preliminary estimate of lanes, wherein the first plausibility and/or the second plausibility may be based on geometric relations and/or rules.

According to an embodiment, a number of trails in the plurality of trails of objects may be above a predetermined trail threshold.

According to an embodiment, a number of lane markings in the plurality of lane markings may be above a predetermined lane marking threshold.

Each of the steps 502, 504, 506, 508, and the further steps described above may be performed by computer hardware components.

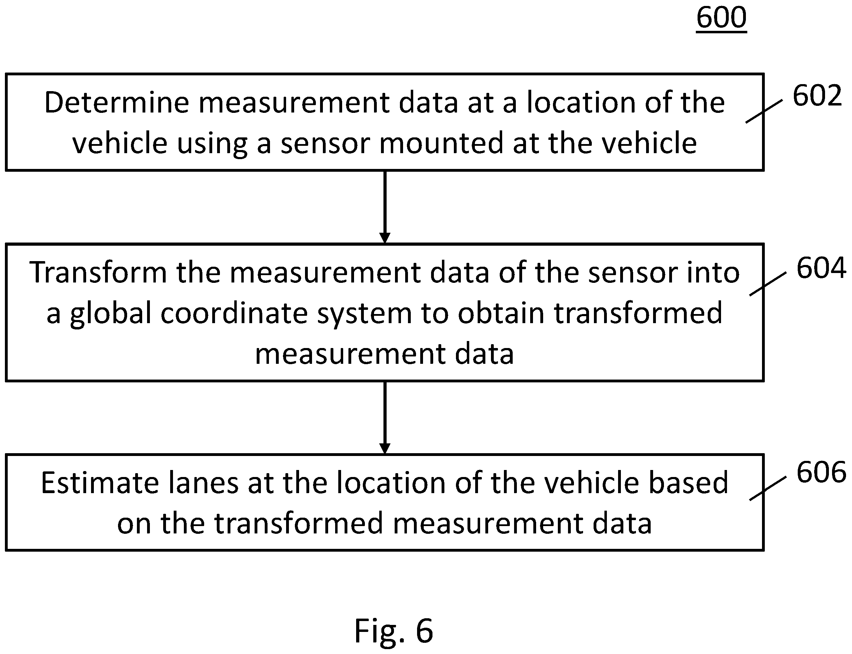

Fig. 6 shows a flow diagram 600 illustrating a method for estimating lanes for a vehicle according to various embodiments. At 602, measurement data may be determined at a location of the vehicle using a sensor mounted at the vehicle. At 604, the measurement data of the sensor may be transformed into a global coordinate system to obtain transformed measurement data. At 606, lanes may be estimated at the location of the vehicle based on the transformed measurement data.

According to an embodiment, the measurement data may comprise estimates for lane markings.

According to an embodiment, the measurement data may comprise estimates for trails of objects.

According to an embodiment, the measurement data may be determined from several drives of the vehicle and/or from several drives of a plurality of recording vehicles.

According to an embodiment, the sensor may comprise a radar sensor and/or a camera.

According to an embodiment, the method may further comprise the following step carried out by the computer hardware components: determining the location of the vehicle.

According to an embodiment, the determining of the location of the vehicle may be based on simultaneous localization and mapping and/or a GPS system and/or a dGPS system and/or an inertial measurement unit.

According to an embodiment, the method may further comprise the following step carried out by the computer hardware components: checking a plausibility of the lanes, wherein the plausibility may be based on physical assumptions regarding a driving behavior of the vehicle and/or physical assumptions regarding a driving behavior of other vehicles.

According to an embodiment, the physical assumptions regarding the driving behavior of the vehicle may comprise assumptions regarding a velocity of the vehicle and/or assumptions regarding a yaw-rate of the vehicle.

According to an embodiment, the physical assumptions regarding the driving behavior of the other vehicles may comprise an acceleration assumption of the other vehicles and/or a braking assumption of the other vehicles and/or a yaw-rate assumption of the other vehicles.

According to an embodiment, the method may further comprise the following step carried out by the computer hardware components: estimating uncertainties of the transformed measurement data.

According to an embodiment, the lanes may be estimated further based on weights with a confidence value.

Each of the steps 502, 504, 506, 508, and the further steps described above may be performed by computer hardware components.

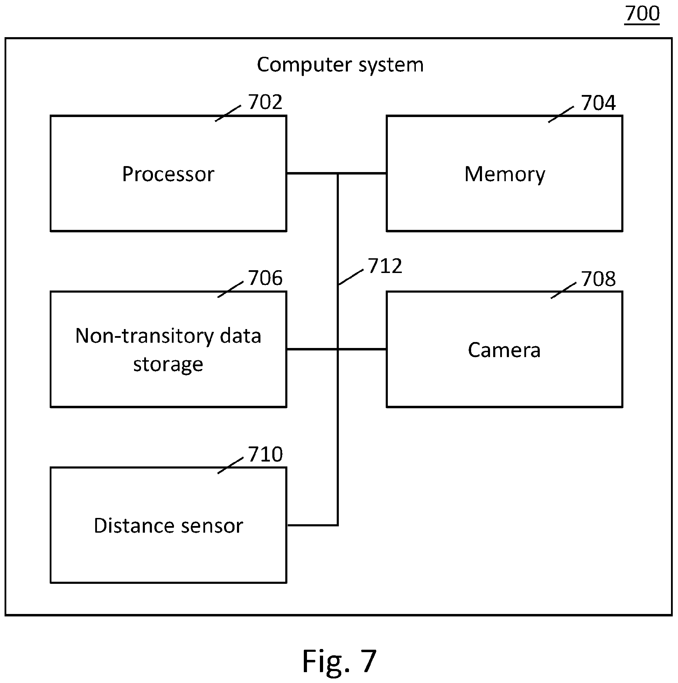

Fig. 7 shows a computer system 700 with a plurality of computer hardware components configured to carry out steps of a computer implemented method for estimating lanes for a vehicle according to various embodiments. The computer system 700 may include a processor 702, a memory 704, and a non-transitory data storage 706. A camera 708 and/or a distance sensor 710 (for example a radar sensor and/or a LiDAR sensor) may be provided as part of the computer system 700 (like illustrated in Fig. 7), or may be provided external to the computer system 700.

The processor 702 may carry out instructions provided in the memory 704. The non-transitory data storage 706 may store a computer program, including the instructions that may be transferred to the memory 704 and then executed by the processor 702. The camera 708 and/or the distance sensor 710 may be used to determine input data, for example measurement data and/or sensor data that is provided to the methods described herein.

The processor 702, the memory 704, and the non-transitory data storage 706 may be coupled with each other, e.g. via an electrical connection 712, such as e.g. a cable or a computer bus or via any other suitable electrical connection to exchange electrical signals. The camera 708 and/or the distance sensor 710 may be coupled to the computer system 700, for example via an external interface, or may be provided as parts of the computer system (in other words: internal to the computer system, for example coupled via the electrical connection 712).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 700.

Reference numeral list

| | |
|---|---|
| 100 | flow diagram illustrating a method for estimating lanes for a vehicle according to various embodiments |
| 101 | flow diagram illustrating a method for estimating lanes for a vehicle comparing a first preliminary estimate of lanes and a second preliminary estimate of lanes |
| 102 | step of determining sensor data |
| 104 | step of determining lane markings |
| 106 | step of determining objects |
| 108 | step of tracking lane markings |
| 110 | step of tracking trails of the objects |

112 step of determining position and pose of the vehicle
114 step of aggregating the lane markings
115 step of estimating lanes from lane markings
116 step of aggregating the trails
117 step of estimating lanes from trails
118 step of comparing lanes from lane markings and lanes from trails
120 step of determining a final estimate of lanes
122 sensor data
124 sensor data
126 sensor data
128 lane markings estimate
130 object estimates
132 plurality of lane markings
134 plurality of trails
136 position estimates
138 first preliminary estimate of lanes
140 second preliminary estimate of lanes
200 flow diagram illustrating a comparison of a first preliminary estimate of lanes and a second preliminary estimate of lanes
202 request for second preliminary estimate of lanes based on trails
204 step of termination
206 request for first preliminary estimate of lanes based on lane markings
208 step of determining a final estimate of lanes based on second preliminary estimate of lanes
210 step of determining a final estimate of lanes based on first preliminary estimate of lanes and second preliminary estimate of lanes
212 final estimated lanes with confidence value

302 vehicle
304 moving vehicle for trails
306 static vehicle
308 lane marking
310 lane with direction
312 obstacle

400 flow diagram illustrating a method for estimating lanes for a vehicle based on transforming measurement data into a global coordinate system
402 step of determining measurement data
404 step of determining lane markings
406 step of determining objects
407 step of transforming data into a global coordinate system
408 step of tracking lane markings
409 step of transforming data into a global coordinate system
410 step of tracking trails of the objects
412 step of determining position and pose of the vehicle
414 step of aggregating the lane markings
416 step of aggregating the trails
418 step of comparing lanes from lane markings and lanes from trails
420 step of determining a final estimate of lanes
422 measurement data
424 measurement data
426 measurement data
428 lane markings estimate
430 object estimates
431 lane markings estimate in global coordinates
432 plurality of lane markings in global coordinates
433 object estimate in global coordinates
434 plurality of trails in global coordinates
436 position estimates
438 estimates of lanes
440 estimates of lanes

500 flow diagram illustrating a method for estimating lanes for a vehicle according to various embodiments
502 step of determining a first preliminary estimate of lanes based on a plurality of lane markings at a location of the vehicle
504 step of determining a second preliminary estimate of lanes based on a plurality of trails of objects at a location of the vehicle
506 step of comparing the first preliminary estimate of lanes and the second preliminary estimate of lanes
508 step of determining a final estimate of lanes at the location of the vehicle based on the comparison
600 flow diagram illustrating a method for estimating lanes for a vehicle according to various embodiments
602 step of determining measurement data at a location of the vehicle using a sensor mounted at the vehicle
604 step of transforming the measurement data of the sensor into a global coordinate system to obtain transformed measurement data
606 step of estimating lanes at the location of the vehicle based on the transformed measurement data

700 computer system according to various embodiments
702 processor
704 memory
706 non-transitory data storage
708 camera
710 distance sensor
712 connection

**Claims**

1. Computer implemented method for estimating lanes for a vehicle (302), the method comprising the following steps carried out by computer hardware components:

- determining (602) measurement data (422, 424, 426) at a location (436) of the vehicle (302) using a sensor mounted at the vehicle (302);
- transforming (604) the measurement data (422, 424, 426) of the sensor into a global coordinate system to obtain transformed measurement data (422, 424, 426); and
- estimating (606) lanes (438, 440) at the location (436) for the vehicle (302) based on the transformed measurement data (422, 424, 426).

2. The method of claim 1, wherein the measurement data (422) comprises estimates for lane markings (308).

3. The method of at least one of claims 1 or 2, wherein the measurement data (424) comprises estimates for trails of objects.

4. The method of at least one of claims 1 to 3, wherein the measurement data (422, 424, 426) are determined from several drives of the vehicle (302) and/or from several drives of a plurality of recording vehicles (304).

5. The method of at least one of claims 1 to 4, wherein the sensor comprises a radar sensor (710) and/or a camera (708).

6. The method of at least one of claims 1 to 5, further comprising the following step carried out by the computer hardware components:

- determining the location (436) of the vehicle (302).

7. The method of claim 6, wherein the determining of the location (436) of the vehicle (302) is based on simultaneous localization and mapping and/or a GPS system and/or a dGPS system and/or an inertial measurement unit.

8. The method of at least one of claims 1 to 7, further comprising the following step carried out by the computer hardware components:

- checking a plausibility of the lanes (438, 440), wherein the plausibility is based on physical assumptions regarding a driving behavior of the vehicle (302) and/or physical assumptions regarding a driving behavior of other vehicles (304).

9. The method of claim 8, wherein the physical assumptions regarding the driving behavior of the vehicle (302) comprise assumptions regarding a velocity of the vehicle (302) and/or assumptions regarding a yaw-rate of the vehicle (302).

10. The method of claim 8, wherein the physical assumptions regarding the driving behavior of the other vehicles (304) comprises an acceleration assumption of the other vehicles (304) and/or a braking assumption of the other vehicles (304) and/or a yaw-rate assumption of the other vehicles (304).

11. The method of at least one of claims 1 to 10, further comprising the following step carried out by the computer hardware components:

- estimating uncertainties of the transformed measurement data.

12. The method of at least one of claims 1 to 11, wherein the lanes (310) are estimated further based on weights with a confidence value.

13. Computer system (700), the computer system (700) comprising a plurality of computer hardware components configured to carry out the steps of the computer implemented method of at least one of claims 1 to 12.

14. Vehicle (302), comprising the computer system (700) of claim 13 and the sensor, wherein the measurement data is determined based on an output of the sensor.

15. Non-transitory computer readable medium (706) comprising instructions for carrying out the computer implemented method of at least one of claims 1 to 12.

102
100

122

126

124

112

136
115
136
117

138
118
140

120

Fig. 1A

101

106

110

130

116

134

124

102

140

136

126

112

118

120

114

136

138

104

122

132

128

108

Fig. 1B

200

204 ─ NO ─ 202

YES

208 ─ NO ─ 206 ─ YES ─ 210

212

Fig. 2

Fig. 3B

304
308
310
302
304
310

Fig. 3A

304
308
310
302
304
310

Fig. 3D

Fig. 3C

20

Fig. 3E

Fig. 3F

Fig. 3G

EP 4 160 154 A1

Fig. 4

EP 4 160 154 A1

500

Determine a first preliminary estimate of lanes
based on a plurality of lane markings at a location of
the vehicle

502

Determine a second preliminary estimate of lanes
based on a plurality of trails of objects at a location
of the vehicle

504

Compare the first preliminary estimate of lanes and
the second preliminary estimate of lanes

506

Determine a final estimate of lanes at the location of
the vehicle based on the comparison

508

Fig. 5

600

Determine measurement data at a location of the vehicle using a sensor mounted at the vehicle

602

Transform the measurement data of the sensor into a global coordinate system to obtain transformed measurement data

604

Estimate lanes at the location of the vehicle based on the transformed measurement data

606

Fig. 6

Computer system

702

Processor

704

Memory

706

Non-transitory data storage

712

708

Camera

710

Distance sensor

Fig. 7

EP 4 160 154 A1

Europäisches
Patentamt

European
Patent Office

Office européen
des brevets

## EUROPEAN SEARCH REPORT

Application Number

EP 21 20 0267

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 819 594 A1 (NISSAN MOTOR [JP]; RENAULT SAS [FR]) 12 May 2021 (2021-05-12) | 1,2,5-7, 13-15 | INV.<br>G01C21/36 |
| Y | * paragraphs [0013] - [0019], [0028] - [0056] * | 8-12 | |
| | ----- | | |
| X | WO 2019/222358 A1 (MOBILEYE VISION TECHNOLOGIES LTD [IL]) 21 November 2019 (2019-11-21) * paragraphs [0163] - [0177], [0225] - [0234] * | 1,3-7, 13-15 | |
| | ----- | | |
| Y | DE 10 2010 033729 A1 (AUDI AG [DE]; AUDI ELECTRONICS VENTURE GMBH [DE]) 9 February 2012 (2012-02-09) * paragraphs [0013], [0019] * | 8-12 | |
| | ----- | | |

TECHNICAL FIELDS
SEARCHED     (IPC)

G01C

The present search report has been drawn up for all claims

| Place of search | Date of completion of the search | Examiner |
|---|---|---|
| The Hague | 7 July 2022 | Tabellion, Marc |

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

```
    1. claims: 1-7, 13-15

        Estimating lanes based on trails of objects
                      ---


    2. claims: 8-12

        Estimating lanes with plausibility check
                      ---
```

## ANNEX TO THE EUROPEAN SEARCH REPORT
## ON EUROPEAN PATENT APPLICATION NO.

EP 21 20 0267

07-07-2022

| Patent document cited in search report | | Publication date | Patent family member(s) | | Publication date |
|---|---|---|---|---|---|
| EP 3819594 | A1 | 12-05-2021 | CN 112673230 | A | 16-04-2021 |
| | | | EP 3819594 | A1 | 12-05-2021 |
| | | | JP 6973964 | B2 | 01-12-2021 |
| | | | JP WO2020008221 | A1 | 15-07-2021 |
| | | | KR 20210027458 | A | 10-03-2021 |
| | | | US 2021262825 | A1 | 26-08-2021 |
| | | | WO 2020008221 | A1 | 09-01-2020 |
| WO 2019222358 | A1 | 21-11-2019 | CN 112384760 | A | 19-02-2021 |
| | | | EP 3784989 | A1 | 03-03-2021 |
| | | | EP 3865822 | A1 | 18-08-2021 |
| | | | US 2021061304 | A1 | 04-03-2021 |
| | | | US 2021061305 | A1 | 04-03-2021 |
| | | | US 2021064056 | A1 | 04-03-2021 |
| | | | US 2021064057 | A1 | 04-03-2021 |
| | | | US 2021072757 | A1 | 11-03-2021 |
| | | | US 2021088355 | A1 | 25-03-2021 |
| | | | US 2021103287 | A1 | 08-04-2021 |
| | | | US 2021245780 | A1 | 12-08-2021 |
| | | | US 2021316751 | A1 | 14-10-2021 |
| | | | WO 2019222358 | A1 | 21-11-2019 |
| DE 102010033729 | A1 | 09-02-2012 | CN 103109160 | A | 15-05-2013 |
| | | | DE 102010033729 | A1 | 09-02-2012 |
| | | | EP 2601480 | A1 | 12-06-2013 |
| | | | US 2014088862 | A1 | 27-03-2014 |
| | | | WO 2012019691 | A1 | 16-02-2012 |

EPO FORM P0459